# EUROPEAN PATENT APPLICATION

(11) **EP 3 190 084 A1**
(43) Date of publication of application: **12.07.2017**
(21) Application number: 15867284.0
(22) Date of filing: 11.12.2015
(51) Int. Cl.: C01B 32/182

(54) **PARTIALLY OXIDIZED GRAPHENE AND PREPARATION METHOD THEREFOR**

(30) Priority: 12.12.2014 KR 20140179764
(71) Applicant: LG Chem, Ltd., Seoul 07336 (KR)
(72) Inventor: SOHN, Kwon Nam, Daejeon 34122 (KR); LEE, Mi Jin, Daejeon 34122 (KR); KWON, Won Jong, Daejeon 34122 (KR); PARK, Se Ho, Daejeon 34122 (KR); YOO, Kwang Hyun, Daejeon 34122 (KR)
(74) Representative: Goddar, Heinz J.
(86) International application number: PCT/KR2015/013606
(87) International publication number: WO 2016/093663

(57) **Abstract**

The present invention relates to a partially oxidized graphene and a method for preparing the same. Since the partially oxidized graphene is prepared by subjecting the partially oxidized graphite to a high pressure homogenization, the exfoliation efficiency is excellent, the inherent characteristics of graphene are maintained even without using a reduction step after exfoliation, and the dispersibility thereof in organic solvents is excellent, and thus the invention can be applied to various fields.

## Description

### [CROSS-REFERENCE TO RELATED APPLICATION(S)]

This application claims the benefit of priority from Korean Patent Application No. 10-2014-0179764 filed on December 12, 2014 with the Korean Intellectual Property Office, the disclosure of which is incorporated herein by reference in its entirety.

### [TECHNICAL FIELD]

The present invention relates to a partially oxidized graphene and a method for preparing the same.

### [BACKGROUND OF ART]

Graphene is a semimetallic material where carbon atoms form an arrangement connected in a hexagonal shape by two-dimensional sp2 bonding while having a thickness corresponding to a carbon atom layer. Recently, it has been reported that the properties of a graphene sheet having one carbon atomic layer were evaluated, and as a result, the graphene sheet may show very excellent electrical conductivity of electron mobility of about 50,000 cm²/Vs or more.

Further, graphene has the properties of structural and chemical stability and excellent thermal conductivity. In addition, graphene is consisting of only carbon which is a relatively light element, and thus, easy to be processed in one-dimensional or two-dimensional nano-patterns. Due to such electrical, structural, chemical and economical properties, graphene is expected to replace a silicon-based semiconductor technology and a transparent electrode in the future, and especially, is possible to be applied to a flexible electronic device field due to excellent mechanical properties.

Due to the numerous advantages and excellent properties of graphene, various methods capable of more effective mass production of the graphene from carbon-based materials such as graphite, have been suggested or studied. In particular, a method capable of easily preparing a graphene sheet or flake with less defect generation, and having a smaller thickness and a large area has been studied in various ways, so that excellent properties of the graphene are more dramatically expressed. Such existing methods of preparing graphene include the following:

First, a method wherein a graphene sheet is exfoliated from graphite by a physical method such as using a tape, is known. However, such method is not suitable for mass production, and has a very low exfoliation yield.

Another method wherein graphite is exfoliated by a chemical method such as oxidation, or acid, base, metal, and the like are inserted between the graphite carbon layers to obtain graphene or an oxide thereof that is exfoliated from an intercalation compound, is known.

However, the former method may generate a number of defects on finally prepared graphene, in the course of obtaining graphene by proceeding with exfoliating by oxidation of graphite, and reducing a graphene oxide obtained therefrom again to obtain graphene. This may adversely affect the properties of finally prepared graphene. Further, the latter method also requires further processes such as using and treating the intercalation compound, and thus, the overall process is complicated, the yield is insufficient, and the economics of the process may be poor. Moreover, it is not easy to obtain a graphene sheet or flake having a large area in such a method.

Due to the problems of those methods, recently, a method of preparing graphene by exfoliating carbon layers contained in graphite by a milling method using ultrasonic irradiation, a ball mill or the like, in a state of dispersing graphite and the like in liquid, is applied the most. However, these methods also had problems of being difficult to obtain graphene having sufficiently small thickness and a large area, generating a number of defects on graphene in an exfoliating process, or having an insufficient exfoliation yield, or the like.

Therefore, there is a continuous demand for a preparation method capable of easily preparing a graphene sheet or flake having a smaller thickness and a large area in a higher yield.

### [DETAILED DESCRIPTION OF THE INVENTION]

### [Technical Problem]

For resolving the aforesaid problems of the prior arts, it is an object of the present invention to provide to provide a method for preparing graphene that can produce graphene of uniform size in an excellent efficiency by using a high-pressure homogenization.

### [Technical Solution]

In order to achieve these objects, the present invention provides a partially oxidized graphene satisfying the following conditions:
the oxygen/carbon (O/C) atomic ratio is 5 to 20%,
the average size (lateral size) is 100 nm to 20 µm, and
the thickness is 0.34 nm to 30 nm.

The present invention also provides a method for preparing a partially oxidized graphene, comprising a step of passing a feed solution including partially oxidized graphite through a high-pressure homogenizer including an inlet, an outlet, and a micro-channel that connects between the inlet and the outlet and has a diameter in a micrometer scale, wherein the partially oxidized graphene has an oxygen/carbon (O/C) atomic ratio of 5 to 20%.

The term "graphite" as used herein is a material also called black lead or plumbago, and is a mineral belonging to a hexagonal system having a crystal structure such as quartz, and has black color and metallic luster. Graphite has a layered, planar structure, and a single layer of graphite is called "graphene" that tries to produce in the present invention, and thus graphite is a main raw material for the production of graphene.

In order to exfoliate graphene from graphite, it is necessary to apply energy that can overcome the π-π interaction between stacked graphenes. In the present invention, high-pressure homogenization method is used as described later. The high-pressure homogenization method can apply a strong shear force to graphite, and thus the exfoliation efficiency of graphene is excellent, but if the graphite in the feed solution used for high-pressure homogenization is not sufficiently dispersed, there is a problem that the exfoliation efficiency is decreased.

On the other hand, in order to increase the exfoliation efficiency of high pressure homogenization, it is desirable that the interlayer spacing of graphite is wider than that of pristine graphite. As in the conventional Hummer's method, a method of oxidizing graphite with a strong acid to introduce a large amount of oxygen-functional group such as hydroxy, epoxide or carboxylic acid into the basal plane and edge and weakening the attraction between graphene layers to thereby exfoliate graphene is known. However, in the case of graphene oxide produced by the above method, since the inherent characteristics of graphene such as high electric conductivity almost disappear, a step of thermally or chemically reducing graphene in a subsequent process is additionally required, thereby showing the limits to production and applications of graphene.

Therefore, in the present invention, a partially oxidized graphite is used instead of the graphite oxide as described above.

As used herein, the term "partially oxidized graphite" refers to graphite having an oxygen/carbon (O/C) atomic ratio of 5 to 20%, and is distinguished from graphite oxide having an oxygen/carbon atomic ratio of 25 to 50% that is produced by oxidizing graphite with a strong acid as in Hummer's method.

The reason for using the partially oxidized graphite instead of the graphite oxide in the present invention is as follows.

First, graphene exfoliated from the partially oxidized graphite can maintain the inherent characteristics of graphene such as high electrical conductivity to a considerable extent, as compared to graphene exfoliated from graphite oxide. Therefore, there is an advantage that a reduction step after exfoliation of graphene is not required.

In addition, since the interlayer attraction is weak due to the oxygen-functional group introduced into the partially oxidized graphite, it is advantageous for exfoliation of graphene by high pressure homogenization compared to pristine graphite, and there is an advantage that the occurrence of defects during exfoliation are greatly reduced. Further, as described later, the degree of oxidation can be easily adjusted by controlling the oxidation condition of the partially oxidized graphite.

In addition, since graphene exfoliated from partially oxidized graphite is also partially oxidized, the oxygen-functional group of exfoliated graphene forms a repulsive force between graphenes and thus the dispersibility in various organic solvents is excellent and a dispersant may not be used during graphene applications. For example, in a general graphene dispersion solution, a dispersant (for example, polyvinyl pyrrolidone) must be used. In the graphene film produced from such a dispersion solution, the dispersant generates a contact resistance with graphene to increase sheet resistance. In the present invention, a stable graphene dispersion solution can be produced without using such dispersant.

Hereinafter, the present invention will be described in more detail.

### Partially Oxidized Graphite

The partially oxidized graphite according to the present invention is a raw material for the production of partially oxidized graphene, and has an oxygen/carbon (O/C) atomic ratio of 5 to 20%.

The oxygen/carbon atomic ratio can be measured by elemental analysis by combustion or XPS (X-ray photoelectron spectrometry) analysis.

The partially oxidized graphite may be prepared by oxidizing a pristine graphite with at least one acidic solution selected from the group consisting of nitric acid and sulfuric acid. Preferably, the acid solution is a mixed solution of nitric acid and sulfuric acid, and it is preferable that nitric acid and sulfuric acid are mixed in a volume ratio (nitric acid: sulfuric acid) of 4:1 to 1:4.

As for the acidic solution, the oxygen/carbon atomic ratio can be controlled within the above range under a mild oxidation condition as compared with the conventional Hummer's method. An oxygen-functional group is introduced into the graphite by the oxidation, whereby the interlayer attraction of graphite is weakened and thus the interlayer spacing is widened.

Further, the degree of oxidation of graphite is affected by the oxidation temperature and the oxidation time. The higher the oxidation temperature and the longer the oxidation time, the higher the degree of oxidation of the graphite. In the present invention, the oxidation temperature is preferably 60 to 110°C in order to adjust the oxygen/carbon atomic ratio within the above range. Further, the oxidation time is preferably 2 to 30 hours.

After completion of the oxidation reaction, a step of recovering and drying partially oxidized graphite may be further included. The recovering step may be carried out by a centrifugation, a vacuum filtration or a pressure filtration. Further, the drying step can be carried out by vacuum drying at a temperature of about 30 to 200°C.

### Feed solution

The term "feed solution" as used herein means a solution containing the partially oxidized graphite, which is a solution introduced into a high-pressure homogenizer described below.

The concentration of the partially oxidized graphite in the feed solution is preferably 0.05 to 100 mg/mL. When it is less than 0.05 mg/mL, the concentration is too low, and thereby the exfoliation efficiency of graphene is decreased. When it exceeds 100 mg/mL, the concentration is too high, which may cause problems such as blocking the flow channel of the high-pressure homogenizer.

As the solvent of the feed solution, one or more selected from the group consisting of water, NMP (N-methyl-2-pyrrolidone), acetone, DMF (N,N-dimethylformamide), DMSO (dimethyl sulfoxide), CHP (cyclohexyl-pyrrolidinone), N12P (N-dodecyl-pyrrolidone), benzyl benzoate, N8P (N-octyl-pyrrolidone), DMEU (dimethyl-imidazolidinone), cyclohexanone, DMA(dimethylacetamide), NMF(N-methyl formamide), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, THF (tetrahydrofuran), ethylene glycol, pyridine, N-vinylpyrrolidone, methyl ethyl ketone (butanone), alpha-terpineol, formic acid, ethyl acetate and acrylonitrile may be used, and water may be preferably used.

As described above, since the repulsive force between graphenes is formed by the oxygen-functional group introduced into the partially oxidized graphite, the degree of dispersion in the feed solution is excellent. Therefore, it is possible to sufficiently use the feed solution for high-pressure homogenization, especially without using a dispersant.

### High-pressure homogenization

This is a step of subjecting the feed solution to high-pressure homogenization to exfoliate graphene from expanded graphite in the feed solution.

The term "high-pressure homogenization" refers to applying a high pressure to a micro-channel having a diameter in a micrometer scale, and applying a strong shear force to the material passing through it. Generally, the high-pressure homogenization is performed using a high-pressure homogenizer including an inlet, an outlet, and a micro-channel that connects between the inlet and the outlet and has a diameter in a micrometer scale.

As described above, since the interlayer attraction is weak due to the oxygen-functional group introduced into the partially oxidized graphite, it is advantageous in exfoliating graphene by high-pressure homogenization compared with a pristine graphite. Further, since the interlayer attraction is weak and the graphene layer is not ruptured during the exfoliation, the exfoliation of large-size graphene is possible.

The micro-channel has preferably a diameter of 50 to 300 µm. Further, it is preferable that the feed solution is introduced in the inlet of the high-pressure homogenizer under application of a pressure of 500 to 3000 bar and passed through the micro-channel.

Furthermore, the feed solution that has passed through the micro-channel can be reintroduced into the inlet of the high-pressure homogenizer, whereby graphene can be additionally exfoliated.

The reintroducing may be repeated twice to ten times. The reintroducing can be carried out by repeatedly using the high-pressure homogenizer used or by using a plurality of high-pressure homogenizers. In addition, the reintroducing may be separately performed by each process, or performed continuously.

Meanwhile, the method may further include a step of recovering and drying graphene from the dispersion solution of graphene recovered in the outlet. The recovering may be carried out by centrifugation, vacuum filtration or pressure filtration. Further, the drying may be carried out by vacuum drying at a temperature of about 30 to 200°C.

### Partially Oxidized Graphene

The partially oxidized graphene produced according to the present invention has an oxygen/carbon (O/C) atomic ratio of 5 to 20%, which corresponds to an oxygen/carbon atomic ratio of the partially oxidized graphite used. Similarly to the partially oxidized graphite, an oxygen/carbon atomic ratio of the partially oxidized graphene may be measured by elemental analysis by combustion or XPS (X-ray photoelectron spectrometry) analysis.

Since the oxygen-functional group of the partially oxidized graphene forms a repulsive force between graphenes, it has excellent dispersibility in various organic solvents. Accordingly, there is an advantage that a dispersant may not be used during graphene applications.

In addition, the partially oxidized graphene produced according to the present invention is characterized in that a ratio of D/G in the Raman spectra is 0.12 to 0.5.

In general, the ratio of D/G in the Raman spectra is the result of measurement of the disordered carbon, which means sp3/sp2 carbon ratio. Therefore, the larger the value of D/G ratio, the higher the degree of change of sp2 carbon of pristine graphene to sp3 carbon, which means that the characteristic inherent to pristine graphene is deteriorated. In the case of graphene oxide produced by the Hummer's method, the D/G ratio is about 1 and does not have the inherent properties of graphene, such as high electrical conductivity. On the other hand, the partially oxidized graphene of the present invention exhibits significantly lower D/G values than the above graphene oxide, and therefore maintain the inherent characteristics of graphene to a large extent.

Further, the partially oxidized graphene produced according to the present invention has a lateral size of 100 nm to 20 µm. Here, the "lateral size" of the partially oxidized graphene can be defined as the longest distance of the linear distance connecting arbitrary two points on the plane of each particle, when each particle of partially oxidized graphene is viewed on a plane having the widest area.

As described above, the partially oxidized graphite has weak interlayer attraction and thus is not ruptured because the graphene layer is exfoliated, so that the exfoliation of large-area graphene as described above is possible.

In addition, the partially oxidized graphene produced according to the present invention is characterized by having a thickness of 0.34 nm to 30 nm.

The thickness of the partially oxidized graphene means the number of graphene layers, In the present invention, since the exfoliation efficiency of graphene is high, graphene having about 90 layers in a single layer can be produced.

The partially oxidized graphene thus produced may be re-dispersed in various solvents and used for various purposes. In particular, the oxygen-functional group forms a repulsive force between the partially oxidized graphenes, and has excellent dispersibility in various organic solvents, so that a dispersant may not be used in various applications. Therefore, it is possible to avoid a decrease in graphene characteristics due to the use of a dispersant, for example, an increase in sheet resistance in a graphene film.

The application of the graphene may include conventional graphene applications and uses such as a conductive paste composition, a conductive ink composition, a composition for forming a heat dissipation substrate, an electrically conductive composite, a composite for EMI shielding, a conductive material or slurry for a battery, and the like.

### [ADVANTAGEOUS EFFECTS]

The partially oxidized graphene and the preparation method thereof according to the present invention has features that, by subjecting the partially oxidized graphite to a high pressure homogenization, the exfoliation efficiency is excellent, the inherent characteristics of graphene is maintained even without using a reduction step after exfoliation, the dispersibility thereof in organic solvents is excellent, and thus the invention can be applied to various fields.

### [BRIEF DESCRIPTION OF THE DRAWINGS]

FIG. 1 illustrates the measurement results of XRD spectra of the raw material BNB90 (FIGS. 1(a) and (b)), and the prepared poGF-75-20 (FIGS. 1(c) and (d)), poGF 90-16 (FIGS. 1 (e) and (d)) and poGF 95-3 (FIGS. 1 (g) and (h)) used in Example of the present invention.
FIG. 2 shows SEM images of the raw material BNB90 (FIGS. 2(a) and (b)) and the prepared GF-75-20 (FIGS. 2(c) and (d)) and poGF-95-3 (FIGS. 2(e) and (d)) used in Example of the present invention.
FIG. 3 shows SEM images of G-10 (FIGS. 3(a) and (b)), poGF-75-20-10 (FIGS. 3(c) and (d)), poGF-85-20-10 (FIGS. 3(e) and (f)), poGF-95-20-10 (FIGS. 3(g) and (h)), and poGF-95-3-10 (FIGS. 3(i) and (j)) prepared in Comparative Example and Example of the present invention.
FIG. 4 shows TEM images of poGF-75-20-10 (FIGS. 4(a) and (b)), poGF-85-20-10 (FIGS. 4(c) and (d)), poGF-95-20-10 (FIGS. 4(e) and (f)) and poGF-95-3-10 (FIGS. 4(g) and (h)) prepared in Example of the present invention.
FIG. 5 shows the AFM measurement results of poGF-75-20-10 prepared in Example of the present invention.
FIG. 6 shows the XPS measurement results of G-10 (FIG. 6(a)) and poGF-75-20-10 (FIG. 6(b)) prepared in Comparative Example and Example of the present invention.
Further, FIG. 6(c) is a table showing the atomic ratios for each carbon and oxygen.
FIG. 7 shows the measurement results of the Raman spectra of poGF-75-20-10 (FIG. 7(a)), poGF-85-20-10 (FIG. 7(b)), poGF-95-20-10 (FIG. 7(c)) and poGF-95-3-10 (FIG. 7(d)) prepared in Example of the present invention.
FIG. 8 shows SEM images of poGF-75-20-1 (FIGS. 8(a) and 8(b)), poGF-75-20-3 (FIGS. 8(c) and 8(d)), poGF-75-20-5 (FIGS. 8(e) and 8(f)), poGF-75-20-7 (FIGS. 8(g) and 8(h)), poGF-75-20-10 (FIGS. 8(i) and 8(j)) and G-10 (FIGS. 8(k) and 8(l)) prepared in Comparative Example and Example of the present invention.
FIG. 9 shows the results of the analysis of graphene lateral sizes of poGF-75-20-1, poGF-75-20-3, poGF-75-20-5, poGF-75-20-7, poGF-75-20-10, GP-1, GP-3, GP-5, GP-7 and GP-10 prepared in Example and Comparative Example of the present invention.
FIG. 10 shows the results of visually observing the degree of redispersion in various solvents of poGF-85-20-10 (FIG. 10(a)), poGF-95-20-10 (FIG. 10(b)) and poGF-95-3-10 (FIG. 10(c)) prepared in Example of the present invention.

### [DETAILED DESCRIPTION OF THE EMBODIMENTS]

Hereinafter, preferred examples are presented to aid in understanding of the invention. However, the following examples are provided only for illustrative purposes, and the scope of the present invention is not limited thereto.

### EXAMPLE

### Step 1

2.5 g of pristine graphite (BNB90) was added to 262.5 mL of a mixed solution of ice-cooled sulfuric acid and nitric acid (volume ratio of sulfuric acid to nitric acid = 3:1) and stirred at about 500 rpm. This was reacted in an oil bath at the temperature and time shown in Table 1 below to partially oxidize pristine graphite. After completion of the reaction, the reaction mixture was cooled to room temperature and slowly added to 1 L of ice-cooled distilled water. The reaction solution diluted with distilled water was filtered under vacuum to recover the partially oxidized graphite and dried in an oven at 100°C overnight. Partially oxidized graphite produced according to reaction temperature and reaction time was named 'poGF-(reaction temperature)-(reaction time)' as shown in Table 1 below.

**[Table 1]**

| Example | Reaction Temperature | Reaction time |
|---|---|---|
| poGF-75-20 | 75°C | 20 hours |
| poGF-85-20 | 85°C | 20 hours |
| poGF-90-16 | 90°C | 16 hours |
| poGF-95-20 | 95°C | 20 hours |
| poGF-95-3 | 95°C | 3 hours |

### Step 2

Each of the partially oxidized graphite prepared in the step 1 was dispersed in 500 mL of distilled water to prepare a partially oxidized graphite feed solution having a concentration of 5 mg/mL. The feed solution was fed to the inlet of the high pressure homogenizer. The high-pressure homogenizer has a structure including an inlet of the raw material, an outlet of the exfoliated product, and a micro-channel that connects between the inlet and the outlet and has a diameter in a micrometer scale. The feed solution was introduced in the inlet while applying high-pressure of 1,600 bar, and a high shear force was applied while passing through a micro-channel having a diameter of 75 µm.

A certain amount of sample was taken from the outlet, and the remainder except for the above sample was reintroduced into the inlet of the high pressure homogenizer and the high pressure homogenization process was repeated. This process was repeated, and the sample taken from the outlet was named 'poGF-(reaction temperature)-(reaction time)-(number of times of passage through high pressure homogenizer)'. For example, when the high pressure homogenization process was repeated five times with poGF-75-20, the sample taken from the outlet was named 'poGF-75-20-5'.

### Comparative Example

Pristine graphite (BNB 90) was dispersed in 500 mL of distilled water to prepare a graphite feed solution having a concentration of 5 mg/mL. The feed solution was subjected to a high pressure homogenization process in the same manner as in step 2 of the above example, and each sample was named 'G-(number of times of passage through high pressure homogenizer)'.

Pristine graphite (BNB 90) was dispersed in 500 mL of distilled water containing 0.5 g of PVP (polyvinylpyrrolidone, weight average molecular weight: 58 K) to prepare a graphite feed solution having a concentration of 5 mg/mL. The feed solution was subjected to high pressure homogenization in the same manner as in step 2 of the above Example, and each sample was named 'GP-(number of times of passage through high pressure homogenizer)'.

### Experimental Example 1

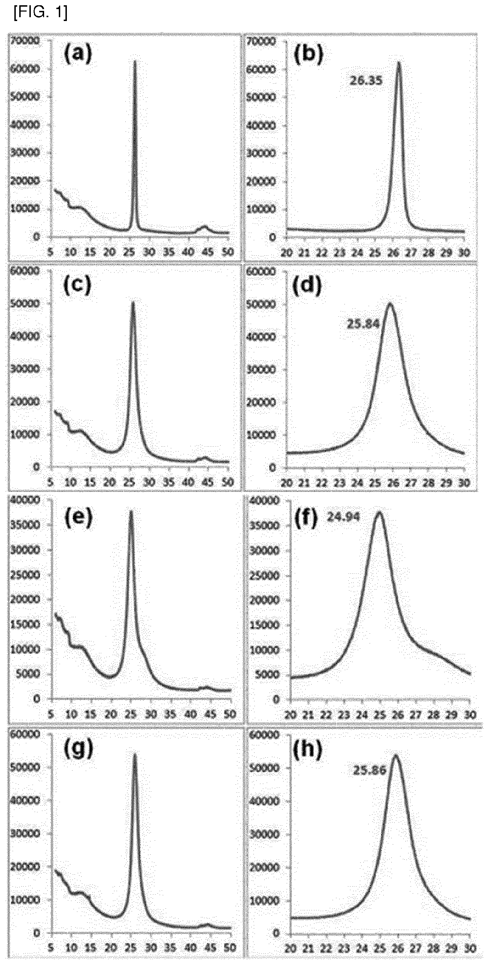

XRD spectra of the raw material BNB90, and the prepared poGF-75-20, poGF 90-16 and poGF 95-3 used in the step 1 of Example were measured and the results were shown in FIG. 1.

Pristine graphite was partially oxidized in a mixed solution of sulfuric acid and nitric acid, and the basal plane and edge of graphite were partially oxidized to introduce an oxygen-functional group into graphite. As a result, as shown in FIG. 1, a peak shift was observed at low angle at the initial peak position (26.35°) of BNB90 due to the introduced oxygen-functional group or acid ion intercalation, etc. and broadening of FWHM was also observed. Further, as the reaction temperature increased from 75°C (FIGS. 1(c) and 1(d)) to 90°C (FIGS. 1 (e) and 1(f)), the degree of partial oxidation increased and thereby more peak shift also occurred. When the reaction time was shortened from 20 hours (FIGS. 1 (e) and 1(f)) to 3 hours (FIGS. 1(g) and 1(h)), the degree of partial oxidation decreased and thereby less peak shift occurred.

Therefore, it can be confirmed from the above results that the inter-sheet spacing of graphite could be increased by introducing an oxygen-functional group by partial oxidation, thereby reducing the attraction between graphite sheets.

### Experimental Example 2

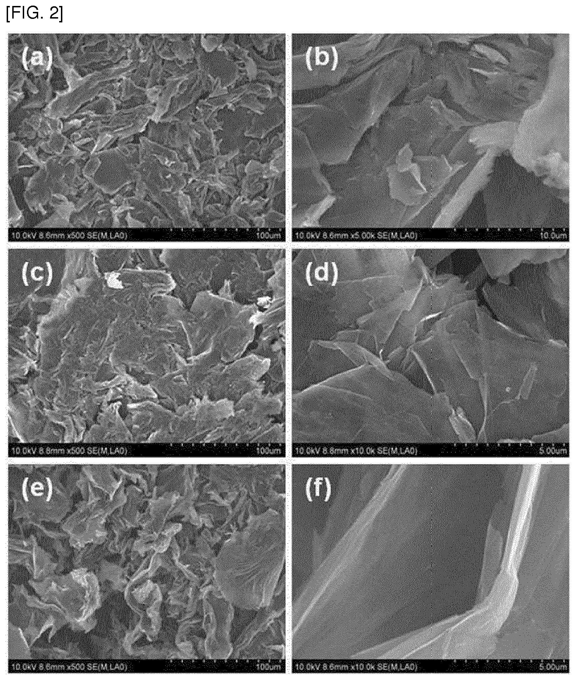

SEM images of the raw material BNB90 and the prepared GF-75-20 and poGF-95-3 used in the step 1 of Example were observed, and the results were shown in FIG. 2.

As shown in Fig. 2, the partially oxidized graphite (FIG. 2(c) to FIG. 2(f)) exhibited a slightly expanded state as compared with BNB90 (FIGS. 2(a) and 2(b)). Therefore, it can be confirmed that the inter-sheet spacing of the partially oxidized graphite was widened, similarly to the results of Experimental Example 1.

### Experimental Example 3

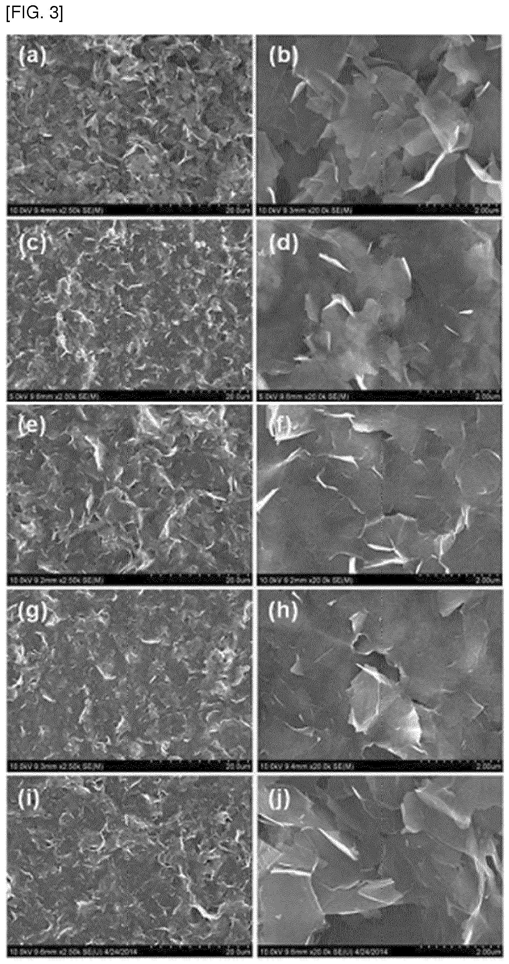

Each of G-10, poGF-75-20-10, poGF-85-20-10, poGF-95-20-10, and poGF-95-3-10 prepared in Comparative Example and Example was subjected to drop-casting on Si wafer and dried, and then SEM images thereof were observed. The results were shown in FIG. 3.

As shown in FIGS. 3(a) and 3(b), when pristine graphite was applied to high pressure homogenization without a dispersant, the surface roughness was observed to be high due to the less exfoliated graphite chunk. On the other hand, as shown in FIGS. 3(c) to 3(j), the partially oxidized graphite had a reduced attraction between the sheets, so that the exfoliation due to high-pressure homogenization was facilitated and the less exfoliated graphite chunks were reduced, and thereby the surface roughness was observed to be low.

In the case of G-10, a re-aggregation phenomenon was observed due to the absence of oxygen-functional group on the surface of the exfoliated graphene, but in the case of using partially oxidized graphite, stable dispersion state was maintained without re-aggregation due to the repulsive force by the oxygen-functional group.

### Experimental Example 4

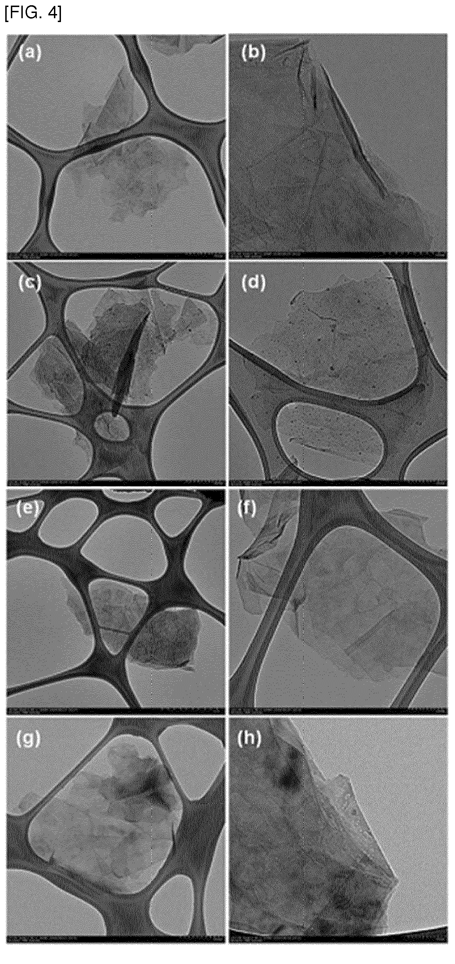

Each of poGF-75-20-10, poGF-85-20-10, poGF-95-20-10, and poGF-95-3-10 prepared in the Example was diluted 10-fold, and then drop casted on Lacey carbon TEM Cu grid followed by drying, and TEM images thereof was observed. The results were shown in FIG. 4.

As shown in FIG. 4, it was confirmed that a graphene having a few layers of thickness was produced by subjecting the partially oxidized graphite to high-pressure homogenization.

### Experimental Example 5

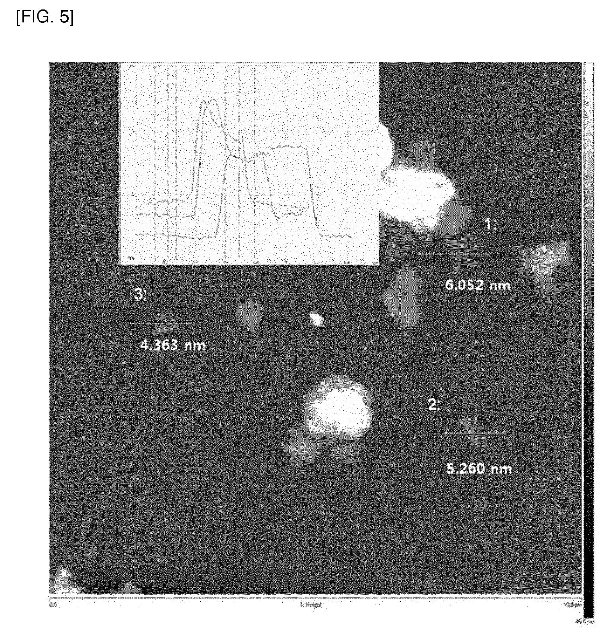

The poGF-75-20-10 prepared in the above Example was diluted 5-fold, subjected to oxygen-plasma treatment, followed by spin-coating on Si wafer, and AFM was measured. The results were shown in FIG. 5.

The thicknesses of graphene measured at positions 1, 2 and 3 shown in FIG. 5 were measured to be 6.052 nm, 5.260 nm and 4.363 nm, respectively. From this, the overall thickness of graphene is expected to be about 5-10 nm.

### Experimental Example 6

The content of each element of poGF-75-20-10, poGF-85-20-10, poGF-95-20-10, and poGF-95-3-10 prepared in the above Example was analyzed, and the results are shown in Table 2 below.

**[Table 2]**

| | C | | O | | O/C atomic ratio | N | | S | |
|---|---|---|---|---|---|---|---|---|---|
| | Averag e | Deviati on | Averag e | Deviati on | | Average | Deviatio n | Average | Deviatio n |
| poGF-75-20-10 | 86.96 | 86.96 | 7.39 | <0.1 | 8.50% | 0.22 | 0.004 | 0.31 | 0.44 |
| poGF-85-20-10 | 86.36 | 86.36 | 9.46 | 0.25 | 10.95% | 0.09 | 0.12 | 0.74 | 0.03 |
| poGF-95-20-10 | 84.30 | 84.30 | 10.60 | 0.06 | 12.57% | 0.16 | 0.01 | 0.86 | 0.02 |
| poGF-95-3-10 | 89.12 | 89.12 | 7.37 | 0.05 | 8.27% | 0.23 | 0.01 | 0.65 | 0.01 |

As shown in Table 2, it was confirmed that that as the reaction temperature increased, the degree of oxidation (O/C atomic ratio) increased from 8.50% to 12.57% by about 1.5 times. It was also confirmed that at the same reaction temperature (95°C), as the reaction time increased, the degree of oxidation increased from 8.27% to 12.57%. From the above results, it was confirmed that the degree of oxidation can be easily adjusted by controlling the partial oxidation reaction conditions.

### Experimental Example 7

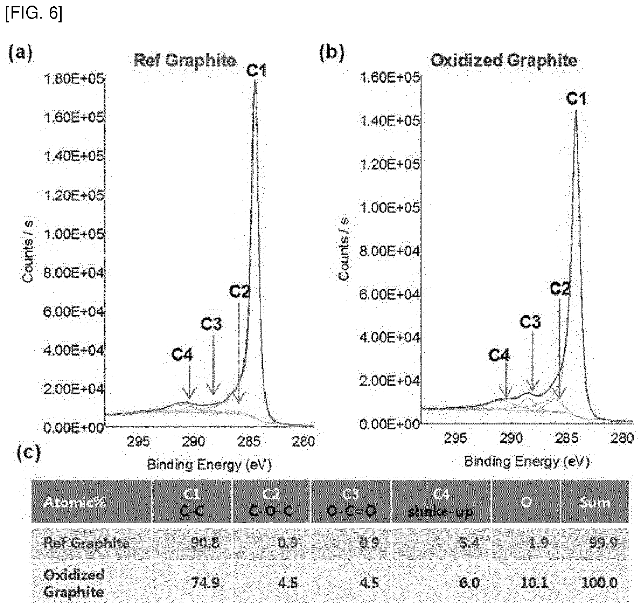

From the XPS analysis of G-10 and poGF-75-20-10 prepared in the Comparative Example and the Example, the types of oxygen-functional groups produced and their degree of oxidation were analyzed. The results were shown in FIG. 6.

As shown in FIG. 6, it was confirmed that the oxygen-functional group mainly formed was an epoxide and a carboxyl group. In addition, similarly to Experimental Example 6, it was confirmed that the ratio of carbon atoms ((C2 + C3)/C1) produced by partial oxidation exhibited about six times higher than G-10, and as a result, an oxygen-functional group was effectively introduced due to the partial oxidation.

### Experimental Example 8

XPS quantitative elemental analysis of G-10, poGF-75-20-10, poGF-85-20-10, poGF-95-20-10 and poGF-95-3-10 prepared in the Comparative Example and the Example was carried out, and the results are shown in Table 3 below.

**[Table 3]**

| | G-10 | poGF-75-20-10 | poGF-85-20-10 | poGF-95-20-10 | poGF-95-3-10 |
|---|---|---|---|---|---|
| C atomic % | 98.1 | 89.9 | 90.5 | 89.2 | 91.2 |
| O atomic % | 1.9 | 10.1 | 9.5 | 10.8 | 8.8 |
| O/C atomic ratio | 1.94% | 11.23% | 10.50% | 12.11% | 9.65% |

As shown in Table 3, as the oxidation reaction temperature increased, the oxygen-to-carbon atomic ratio increased from 1.94% to 12.11% of G-10 by about 5.4 to 6.2 times. Further, when the oxidation reaction time was reduced, the oxygen/carbon atomic ratio decreased from 12.11% to 9.65%. Therefore, it was confirmed that the degree of oxidation can be controlled according to the oxidation reaction conditions, similarly to the elemental analysis results of Experimental Example 6.

### Experimental Example 9

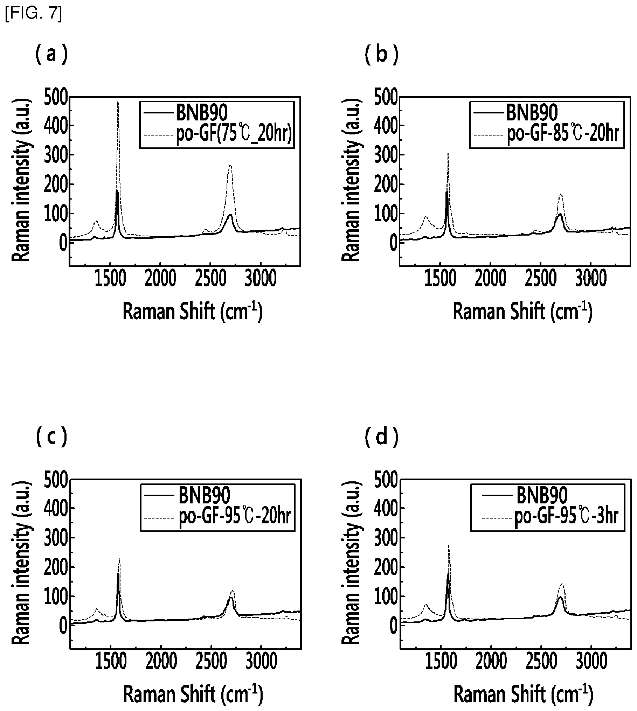

Raman spectra of G-10, poGF-75-20-10, poGF-85-20-10, poGF-95-20-10, and poGF-95-3-10 prepared in the Comparative Examples and Examples were measured, and the results are shown in FIG. 7. The D/G ratios calculated therefrom are shown in Table 4 below.

**[Table 4]**

| | D/G ratio |
|---|---|
| G-10 | 0.107 |
| poGF-75-20-10 | 0.155 |
| poGF-85-20-10 | 0.253 |
| poGF-95-20-10 | 0.285 |
| poGF-95-3-10 | 0.262 |

In the oxidized graphite produced by the conventionally known Hummer's process, many defects occurred such that the ratio of D/G in the Raman spectra was close to about 1.0, and such graphite oxide caused loses of electrical conductivity. However, as shown in Table 4, it was confirmed that when the partially oxidized graphite was homogenized at high pressure, it exhibited a very small D/G ratio as compared to graphite oxide, and thus the occurrence of defects was low. In addition, similarly to Experimental Example 12 to be described later, the film produced with such graphene causes an electric conductivity to be high.

### Experimental Example 10

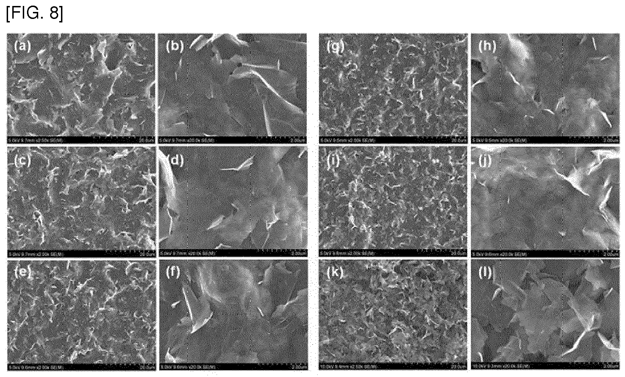

Each of poGF-75-20-1, poGF-75-20-3, poGF-75-20-5, poGF-75-20-7, poGF-75-20-10 and G-10 prepared in the Example and Comparative Example was drop-casted on a Si wafer and dried, and SEM images were observed. The results were shown in FIG 8.

As shown in FIG. 8, when the partially oxidized graphite was exfoliated by high pressure homogenization, it was confirmed that a superior exfoliation effect was exhibited as compared with G-10 even when high pressure homogenization was applied once.

### Experimental Example 11

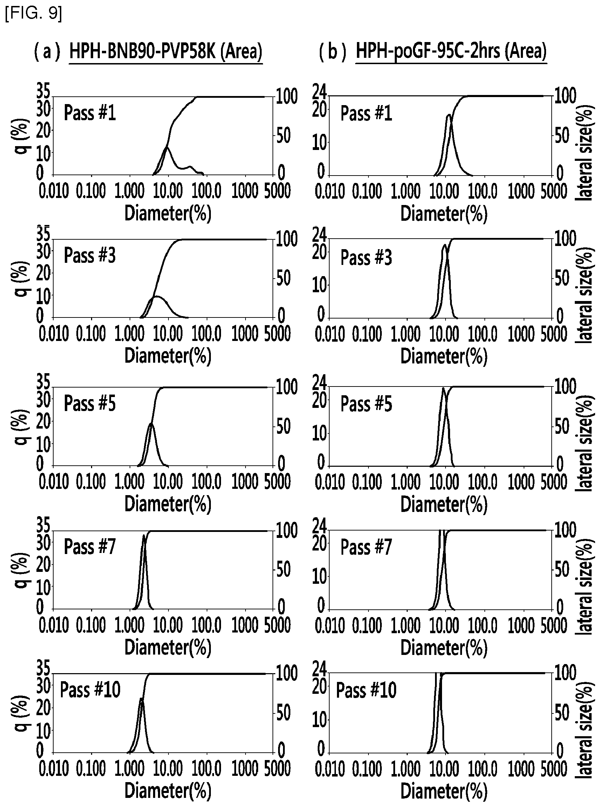

The graphene particle size (lateral size) of each of poGF-75-20-1, poGF-75-20-3, poGF-75-20-5, poGF-75-20-7, poGF-75-20-10, GP-1, GP-3, GP-5, GP-7 and GP-10 prepared in the Example and Comparative Example was analyzed, and the results were shown in FIG 9.

As shown in FIG. 9, when the high pressure homogenization was applied once to a pristine graphite, the bimodal particle distribution was shown, That is, since the interlayer attraction of pristine graphite was high, the graphene layer was exfoliated while being partially ruptured, and thereby not allowing the occurrence of uniform exfoliation. On the other hand, this phenomenon was not observed when high pressure homogenization was applied once to the partially oxidized graphite. This is because the interlayer attraction of the partially oxidized graphite became small and thus the graphene layer was exfoliated without partial rupture. In addition, when comparing the average particle size (lateral size) of graphene after applying the high pressure homogenization 10 times, it was confirmed that poGF-75-20-10 (5.84 µm) was significantly larger than GP-10 (1.89 µm).

From the above results, it was confirmed that the large area graphene could be exfoliated when the partially oxidized graphite was applied to high pressure homogenization.

### Experimental Example 12

Each of poGF-75-20-10, poGF-85-20-10, poGF-95-20-10, poGF-95-3-10 and GP-10 prepared in the Example and Comparative Example was diluted such that graphene concentrations was 0.2 mg/mL, and 31.5 mL of the diluent was vacuum filtered through an AAO membrane (200 nm pore, diameter of 4.5 cm) and dried at 55°C for 2 days. The sheet resistance was measured for AAO membrane using a 4-point probe, and the results were shown in Table 5 below.

**[Table 5]**

| | Rs(Ω/□) | S.D. |
|---|---|---|
| poGF-75-20-10 | 8.966 | 0.083 |
| poGF-85-20-10 | 12.424 | 0.962 |
| poGF-95-20-10 | 32.985 | 2.143 |
| poGF-95-3-10 | 10.458 | 0.226 |
| GP-10 | 34.557 | 2.305 |

Generally, peroxidized product graphene oxide prepared by the Hummer's method exhibits the characteristics of an insulator, and thus an additional thermal or chemical reduction process is required to impart an electrical conductivity. However, graphene exfoliated from the partially oxidized graphite as in the present invention could maintain a considerable part of the electrical conductivity, and as shown in Table 5 above, there was a difference depending on the degree of oxidation, but it exhibited generally low sheet resistance.

In addition, in the case of GP-10, the use of a dispersant is essential for producing a stable dispersion solution. The dispersant causes a contact resistance between graphenes to increase the sheet resistance of the graphene film. This could be confirmed from GP-10 shown in Table 5 above. On the other hand, graphene exfoliated from the partially oxidized graphite as in the present invention could produce a stable dispersion solution without using a dispersant, and therefore, the problem of contact resistance by the dispersant does not occur, thereby exhibiting low sheet resistance as shown in Table 5 above.

### Experimental Example 13

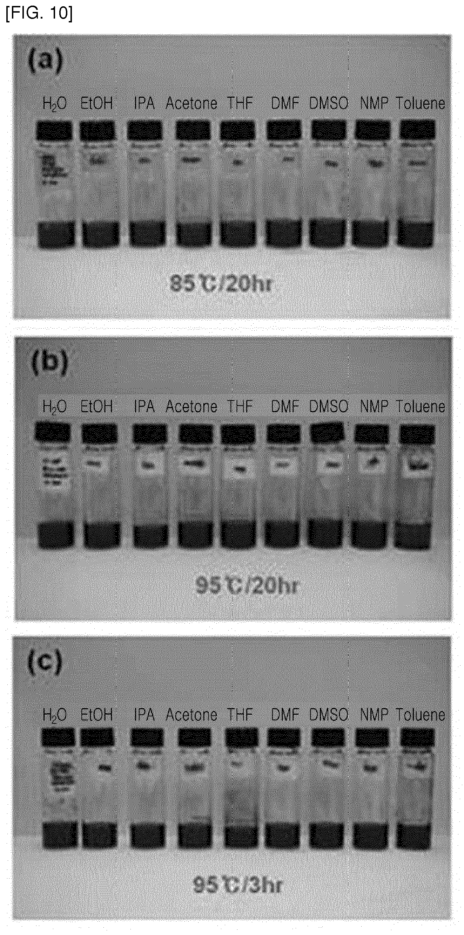

Each of poGF-85-20-10, poGF-95-20-10 and poGF-95-3-10 prepared in the Example was filtered under vacuum to recover graphene and dried at 55°C for 2 days. 1.0 g of each dried graphene was added to 3 mL of the solvent shown in Table 6, followed by bath sonication for 1 hour, and the degree of redispersion was observed by a naked eye. The criteria of judgment by a naked eye was determined through the residual amount of graphene not dispersed on the bottom after bath sonication, and the results were shown in FIG. 10 and Table 6 below.

**[Table 6]**

| | H₂O | EtOH | IPA | Acetone | THF | DMF | DMSO | NMP | Toluene |
|---|---|---|---|---|---|---|---|---|---|
| poGF-85-20-10 | ○ | Δ | X | X | ○ | ○ | ○ | Δ | X |
| poGF-95-20-10 | ○ | ○ | Δ | ○ | ○ | ○ | ○ | ○ | X |
| poGF-95-3-10 | ○ | ○ | ○ | X | X | ○ | X | ○ | X |
| ○: well-dispersed, Δ: partially-dispersed, X: not-dispersed | | | | | | | | | |

As shown in FIG. 10 and Table 6, it was confirmed that the dispersibility in various polar organic solvents was increased according to the degree of oxidation. In particular, the dispersibility was excellent in polar organic solvents such as water, NMP, DMF and DMSO. In case of poGF-95-20-10, the dispersibility was excellent even in EtOH, IPA, acetone and THF.

From the above results, it was confirmed that the degree of oxidation can be adjusted by controlling the solvent dispersibility of graphene.

## Claims

1. A partially oxidized graphene having:
an oxygen/carbon (O/C) atomic ratio of 5 to 20%,
an average size (lateral size) of 100 nm to 20 µm, and
a thickness of 0.34 nm to 30 nm.

2. The partially oxidized graphene according to claim 1, wherein
the partially oxidized graphene has a ratio of D/G in the Raman spectra of 0.12 to 0.5.

3. A method for preparing a partially oxidized graphene, comprising a step of passing a feed solution including partially oxidized graphite through a high-pressure homogenizer including an inlet, an outlet, and a micro-channel that connects between the inlet and the outlet and has a diameter in a micrometer scale,
wherein the partially oxidized graphene has an oxygen/carbon (O/C) atomic ratio of 5 to 20%.

4. The method for preparing graphene according to claim 3, wherein
the partially oxidized graphite may be prepared by oxidizing a pristine graphite with at least one acidic solution selected from the group consisting of nitric acid and sulfuric acid.

5. The method for preparing graphene according to claim 4, wherein
the oxidation time is 2 to 30 hours.

6. The method for preparing graphene according to claim 3, wherein
the concentration of the partially oxidized graphite in the feed solution is 0.05 to 100 mg/mL.

7. The method for preparing graphene according to claim 3, wherein
the solvent of the feed solution is one or more selected from the group consisting of water, NMP (N-methyl-2-pyrrolidone), acetone, DMF (N,N-dimethylformamide), DMSO (dimethyl sulfoxide), CHP (cyclohexyl-pyrrolidinone), N12P (N-dodecyl-pyrrolidone), benzyl benzoate, N8P (N-octyl-pyrrolidone), DMEU (dimethyl-imidazolidinone), cyclohexanone, DMA (dimethylacetamide), NMF (N-methyl formamide), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, THF (tetrahydrofuran), ethylene glycol, pyridine, N-vinylpyrrolidone, methyl ethyl ketone (butanone), alpha-terpineol, formic acid, ethyl acetate and acrylonitrile.

8. The method for preparing graphene according to claim 3, wherein
the partially oxidized graphite in the feed solution is exfoliated while passing through a micro-channel under application of a shear force, thereby preparing a graphene.

9. The method for preparing graphene according to claim 3, wherein
the micro-channel has a diameter of 50 to 300 µm.

10. The method for preparing graphene according to claim 3, wherein
the feed solution is introduced in the inlet of the high-pressure homogenizer under application of a pressure of 500 to 3000 bar and passed through the micro-channel.

11. The method for preparing graphene according to claim 3, wherein
the step of passing the material recovered in the inlet through a micro-channel is additionally repeated once to 9 times.

12. The method for preparing graphene according to claim 3, wherein
the graphene prepared has an average thickness of 0.34 nm to 30 nm.

13. The method for preparing graphene according to claim 3, wherein
the graphene prepared has a lateral size of 100 nm to 20 µm.
